# EUROPEAN PATENT APPLICATION

(11) **EP 2 509 146 A1**
(43) Date of publication of application: **10.10.2012**
(21) Application number: 11821342.0
(22) Date of filing: 01.09.2011
(51) Int. Cl.: H01M 8/04, H01M 8/10

(54) **FUEL CELL SYSTEM AND METHOD FOR OPERATING FUEL CELL SYSTEM**

(30) Priority: 02.09.2010 JP 2010196381
(71) Applicant: Panasonic Corporation, Osaka 571-8501 (JP)
(72) Inventor: NAGASATO, Hiroshi, Osaka 540-6207 (JP); SHIMADA, Takanori, Osaka 540-6207 (JP); TANAKA, Yoshikazu, Osaka 540-6207 (JP)
(74) Representative: Grünecker, Kinkeldey, Stockmair & Schwanhäusser
(86) International application number: PCT/JP2011/004900
(87) International publication number: WO 2012/029321

(57) **Abstract**

A fuel cell system (1) comprises a fuel cell unit (10); and a control unit (20); the control unit including: an allowable operation time setting section (22) which sets an allowable operation time (T6) of the fuel cell unit for each unit period (T3); and an operation control section (21) which operates the fuel cell unit such that an actual operation time (T7) of the fuel cell unit per unit period is not more than the allowable operation time; the allowable operation time setting section calculates an accumulated value of reference values (T5) of the allowable operation time for each unit period which correspond to past all unit periods and an accumulated value of values of the actual operation time for each unit period which correspond to past all unit periods, the reference values of the allowable operation time for each unit period being set based on the durable operation time (T2) and the guaranteed usage period (T1); and if a remaining operation time (T9) which is a difference value between the accumulated values, a time obtained by adding a divided part of the remaining operation time to the reference value, is set as an allowable operation time in a next unit period.

## Description

### Technical Field

The present invention relates to a fuel cell system including a fuel cell unit which generates electric power through an electrochemical reaction between fuel and air, and an operation method of the fuel cell system. In particular, the present invention relates to a fuel cell system which is configured to set an allowable value of an operation time for which the fuel cell system will be operated from now, based on an accumulated value of an operation time for which the fuel cell system was operated in the past actually, and an operation method of the fuel cell system.

### Background Art

Conventionally, fuel cell systems have been developed assuming that the usage of about 10 years, to be precise, a guaranteed usage period of about 10 years is achieved. Specifically, when a development aim of a durable operation time of the fuel cell systems is about 40000 hours, the fuel cell systems are developed assuming that they are operated for about 4000 hours per year.

Some of the fuel cell systems are automatically operated to provide economical advantages to users by controlling the operation time in response to a demand for hot water supply and a demand for electric power. In this case, when an emphasis is placed on only the economical advantages, a continued operation time tends to be typically long to suppress consumption of energy during start-up and shut-down of the fuel cell system (consumption of energy which does not directly contribute to power generation). In this case, it is presumed that a case where the operation time of the fuel cell system exceeds assumed 4000 hours/year frequently occurs.

For example, an operation time of a fuel cell unit in a case where a most economical operation is performed based on the demand for hot water supply and the demand for electric power of standard home is calculated as about 6000 hours per year. If the fuel cell unit is operated in response to a standard demand based on this calculated operation time, the operation time reaches a durable operation time of the fuel cell unit in less than 7 years (= 40000 hours ÷ 6000 hours), which is much shorter than the guaranteed usage period which is assumed as about 10 years. This will shorten a life of the fuel cell system. To avoid such a situation, there has been proposed a fuel cell system which controls an operation time every day within a time per day determined based on the durable operation time (see e.g., Patent Literature 1).

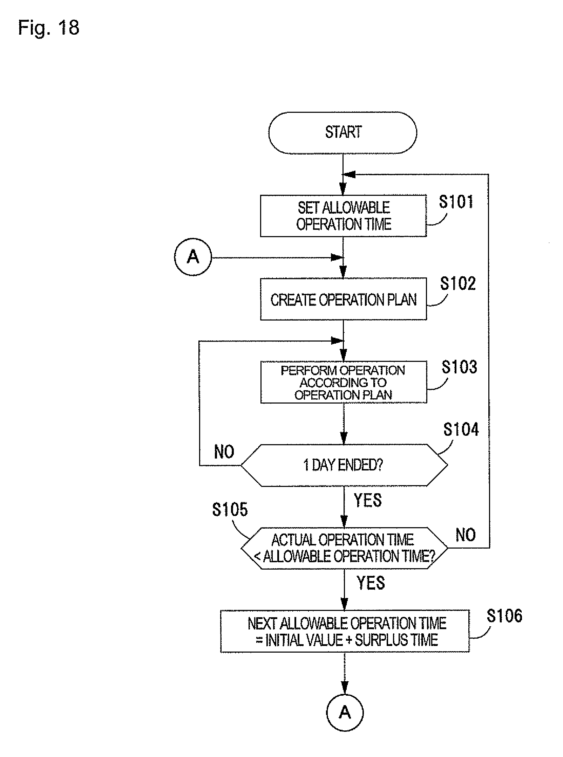

Fig. 18 is a flowchart showing a control method of a conventional fuel cell system disclosed in Patent Literature 1. As shown in Fig. 18, in the fuel cell system disclosed in Patent Literature 1, initially, an allowable operation time per day is set (S101). The allowable operation time is based on a durable (usable) operation time of the fuel cell system, and a required life of the fuel cell system. To make a product life 10 years when the durable operation time is 40000 hours, the operation time per year is 4000 hours. Therefore, an initial value of an allowable operation time per day is 11 hours obtained by dividing 4000 hours by days (365 days) in one year.

Then, an operation plan is created (S102). In the operation plan, a time for which the fuel cell system is operated is decided based on the allowable operation time, and time periods for which demands of hot water supply and electric power occur, which are predicted based on actual past operation. Therefore, the operation plan is created to meet predetermined criteria in terms of energy saving, economical efficiency, environment protection, etc., such that the operation time will not exceed the allowable operation time. Then, the fuel cell system is operated according to the operation plan (S103). During this operation, it is determined on a regular basis whether or not one day has ended (S104). If it is determined that one day has not ended, the operation based on the operation plan continues (S103). If it is determined that one day has ended, it is determined whether or not an actual operation time per day is less than the allowable operation time (S105).

If it is determined that the actual operation time per day is not less than the allowable operation time (S105: NO), the process returns to the step of setting the allowable operation time (S101). Then, the above stated steps are repeated. On the other hand, if it is determined that the actual operation time per day is less than the allowable operation time, a surplus time which is a difference between the allowable operation time and the actual operation time is added to the initial value of the allowable operation time, and the resulting time is set as a next allowable operation time per day (S106).

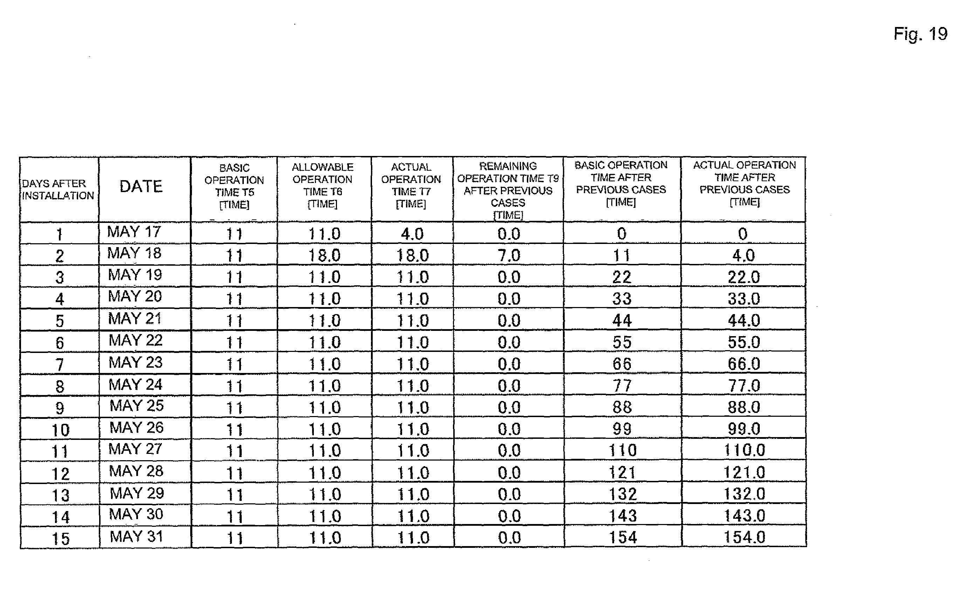

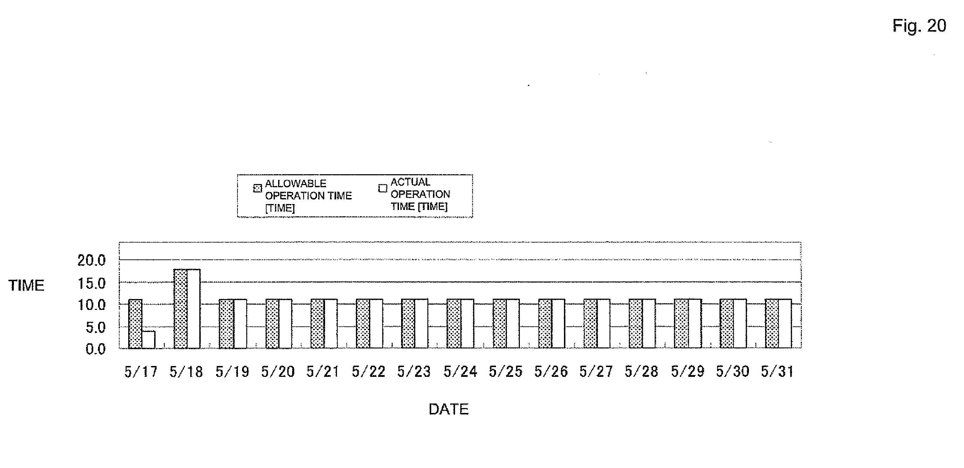

Fig. 19 is a table illustrating an example of specific setting of an allowable operation time in the case of using the control method of the fuel cell system disclosed in Patent Literature 1. Fig. 20 is a bar graph showing a change in the allowable operation time and a change in the actual operation time corresponding to the setting example of Fig. 19. As shown in Fig. 19, the allowable operation time on a 1st day (May 17) is set to 11 hours which are the above stated initial value. If the actual operation time on the 1st day is 4 hours, a surplus time which is a difference between the allowable operation time (11 hours) and the actual operation time (4 hours) is 7 hours. Because of this, an allowable operation time on a next day (May 18) is set to 18 hours which are a sum of the initial value (11 hours) of the allowable operation time and the surplus time (7 hours).

In accordance with the control method of Patent Literature 1, the surplus time on the previous day is added to the initial value of the allowable operation time and the resulting time is set as the allowable operation time on that day. This can prevent all of the durable operation time from being consumed and the end of its life from being reached, before the guaranteed usage period (e.g., 10 years) of the fuel cell unit lapses. As a result, a demand for more hot water supply and a demand for more electric power are met by heat and electric power generated in the fuel cell system.

### Citation Lists

### Patent Literature

Patent Literature 1: Japanese Laid-Open Patent Application Publication No. 2007-323843

### Summary of the Invention

### Technical Problem

However, in accordance with the above stated conventional control method, if the fuel cell system is operated for 18 hours which are the overall allowable operation time on a 2nd day (May 18), then, the allowable operation time on a next day (May 19) is 11 hours which are the initial value. Because of this, the operation times for three days from May 17 to May 19 are 4 hours, 18 hours, and 11 hours which change significantly. This would make the user feel discomfort. Due to this discomfort, the user may misidentify that the fuel cell system has a problem.

The present invention is directed to solving the problem associated with the prior art, and an object of the present invention is to provide a fuel cell system which prevents all of durable operation time from being consumed and its life from being shortened, before a guaranteed usage period lapses, and lessen a change in the allowable operation time from day to day to allow the user to use the fuel cell system without feeling discomfort, and an operation method thereof.

### Solution to Problem

The present invention has been developed in view of the above stated circumstances, and a fuel cell system of the present invention comprises a fuel cell unit which supplies electric power generated through an electrochemical reaction between fuel gas and oxidizing gas to an external load; and a control section which controls an operation of the fuel cell unit; the control section including: an allowable operation time setting section which sets an allowable operation time of the fuel cell unit for each unit period shorter than a guaranteed usage period set in the fuel cell unit, based on a durable operation time of the fuel cell unit; and an operation control section which operates the fuel cell unit such that an actual operation time of the fuel cell unit per unit period is not more than the allowable operation time set for each unit period; the allowable operation time setting section calculates an accumulated value of reference values of the allowable operation time for each unit period which correspond to past all unit periods and an accumulated value of values of the actual operation time for each unit period which correspond to past all unit periods, the reference values of the allowable operation time for each unit period being set based on the durable operation time and the guaranteed usage period; and if a remaining operation time which is a difference value between the accumulated value of reference values of the allowable operation time and the accumulated value of the values of the actual operation time occurs, the allowable operation time setting section sets a time obtained by adding a divided part of the remaining operation time to the reference value, as an allowable operation time in a next unit period.

In accordance with this configuration, since a divided part of the remaining operation time is added to the reference value to set an allowable operation time in a next case, the remaining operation time which is relatively longer can be consumed while suppressing the allowable operation time in the next case from increasing significantly with respect to that in a previous case. Therefore, the fuel cell system can be used over the entire guaranteed usage period without leaving a part of durable operation time of the fuel cell system, while preventing the user from feeling discomfort due to a fluctuation in the allowable operation time. In addition, since the durable operation time is consumed fully over the guaranteed usage period, a demand for more hot water supply and a demand form more electric power can be met by the heat and the electric power generated in the fuel cell system.

As a method of dividing the remaining operation time and adding a part of it to the reference value, a method may be used, in which the remaining operation time is divided by the predetermined number of days (e.g., 10 days) evenly and the calculated value is added to the reference value. Or, for example, table data indicating a correlation between the remaining operation time and the addition value (divided part of the remaining operation time) to be added to the reference value may be pre-set and pre-stored, and the allowable operation time may be set based on the remaining operation time obtained sequentially and the table data.

The reference values of the allowable operation time may be set such that the accumulated value obtained by adding the reference values corresponding to all of the unit periods conforms to the durable operation time.

The fuel cell unit may be a heat and electric power supply device which supplies electric power and heat; the operation control section may decide an operation start time in the unit period based on an amount of electric power consumed in the external load in the past and an amount of heat consumed in the external load in the past such that the actual operation time is not more than the allowable operation time; and the operation control section may control the fuel cell unit such that the fuel cell unit outputs the electric power according to an amount of electric power consumed by the external load, after the fuel cell unit is started-up at the power generation start time.

The allowable operation time setting section may set the allowable operation time such that the allowable operation time obtained by adding the part of the remaining operation time to the reference value is shorter than the unit period.

The allowable operation time setting section may set the allowable operation time in such a manner that a time obtained by dividing the remaining operation time by predetermined number of days is added to the reference value.

The allowable operation time setting section may pre-store data indicating a relation between the remaining operation time and an addition value which is added to the reference value.

The allowable operation time setting section may set the allowable operation time in such a manner that if a remaining durable time which is a difference value between the accumulated value of the values of the actual operation time which correspond to past all unit periods and the durable operation time is less than a predetermined value, the remaining operation time is allocated to remaining unit periods without leaving a surplus time.

The reference values of the allowable operation time may be set greater in a period in a year in which a demand for heat is higher than in a period in the year in which a demand for heat is lower.

The reference values of the allowable operation time may be set greater in a period in a year in which an average temperature on one day is relatively lower.

The reference values of the allowable operation time may be set such that a reference value in a particular period in a year is greater than a reference value in the particular period in a subsequent year coming after the year.

A method of operating a fuel cell system including a fuel cell unit and a control section which controls the fuel cell unit, of the present invention, comprises the steps of: setting an allowable operation time of the fuel cell unit for each unit period shorter than a guaranteed usage period set in the fuel cell unit, based on a durable operation time of the fuel cell unit; and operating the fuel cell unit such that an actual operation time of the fuel cell unit per unit period is not more than the allowable operation time set for each unit period; in the step of setting the allowable operation time, an accumulated value of reference values of the allowable operation time for each unit period which correspond to past all unit periods is calculated, and an accumulated value of values of the actual operation time for each unit period which correspond to past all unit periods is calculated, the reference values of the allowable operation time for each unit period being set based on the durable operation time and the guaranteed usage period; and if a remaining operation value which is a difference value between the accumulated value of reference values of the allowable operation time and the accumulated value of the values of the actual operation time occurs, setting a time obtained by adding a divided part of the remaining operation time to the reference value, as an allowable operation time in a next unit period.

### Advantageous Effects of the Invention

In accordance with the fuel cell system and the operation method thereof, of the present invention, it is possible to lessen a change in the allowable operation time which occurs from day to day, to allow the user to use the fuel cell system without feeling discomfort, while preventing all of the durable operation time from being consumed fully and its life from being shortened, before the guaranteed usage period lapses. In addition, a demand for more hot water supply and a demand for more electric power can be met by the heat and the electric power generated in the fuel cell system.

### Brief Description of Description

[Fig. 1] Fig. 1 is a schematic view showing a configuration of a fuel cell system according to Embodiment 1.
[Fig. 2] Fig. 2 is a schematic view showing a concept of terms indicating times or periods used to describe setting of an allowable operation time.
[Fig. 3] Fig. 3 is a flowchart showing a control procedure of a power generation operation of the fuel cell system.
[Fig. 4] Fig. 4 is a flowchart showing a process for setting an allowable operation time per unit period.
[Fig. 5] Fig. 5 is a table showing a first setting example of the allowable operation time.
[Fig. 6] Fig. 6 is a bar graph showing a change in the allowable operation time and a change in an actual operation time of the table of Fig. 5, which change occurs from day to day.
[Fig. 7] Fig. 7 is a table showing a second setting example of the allowable operation time.
[Fig. 8] Fig. 8 is a bar graph showing a change in the allowable operation time and a change in the actual operation time of the table of Fig. 7, which change occurs from day to day.
[Fig. 9] Fig. 9 is a flowchart showing a process for setting the allowable operation time per day according to Embodiment 2.
[Fig. 10] Fig. 10 is a table showing a third setting example of the allowable operation time.
[Fig. 11] Fig. 11 is a bar graph showing a change in the allowable operation time and a change in the actual operation time of the table of Fig. 10, which change occurs from day to day.
[Fig. 12] Fig. 12 is a table showing a comparative example relating to setting of the allowable operation time.
[Fig. 13] Fig. 13 is a bar graph showing a change in the allowable operation time and a change in the actual operation time of the table of Fig. 12, which change occurs from day to day.
[Fig. 14] Fig. 14 is a conceptual view of a setting table showing a basic operation time T5 set for each year and month which passes after the fuel cell system is installed.
[Fig. 15] Fig. 15 is a graph showing a change in the basic operation time of Fig. 14, which change occurs with a passage of year.
[Fig. 16] Fig. 16 is a conceptual view of a setting table showing the relationship between the remaining operation time and the addition time.
[Fig. 17] Fig. 17 is a flowchart showing a process for setting the allowable operation time per day according to Embodiment 3.
[Fig. 18] Fig. 18 is a flowchart showing a control method of a conventional fuel cell system.
[Fig. 19] Fig. 19 is a table showing an example of specific setting of the allowable operation time in a case where a control method of the conventional fuel cell system is used.
[Fig. 20] Fig. 20 is a bar graph showing an example of a change in the allowable operation time and a change in the actual operation time corresponding to the setting example of Fig. 19, which change occurs from day to day.

### Description of the Embodiments

Hereinafter, a fuel cell system and an operation method thereof according to embodiments of the present invention be described in detail with reference to the drawings. Note that the present invention is in no ways limited to the embodiments described below.

### (Embodiment 1)

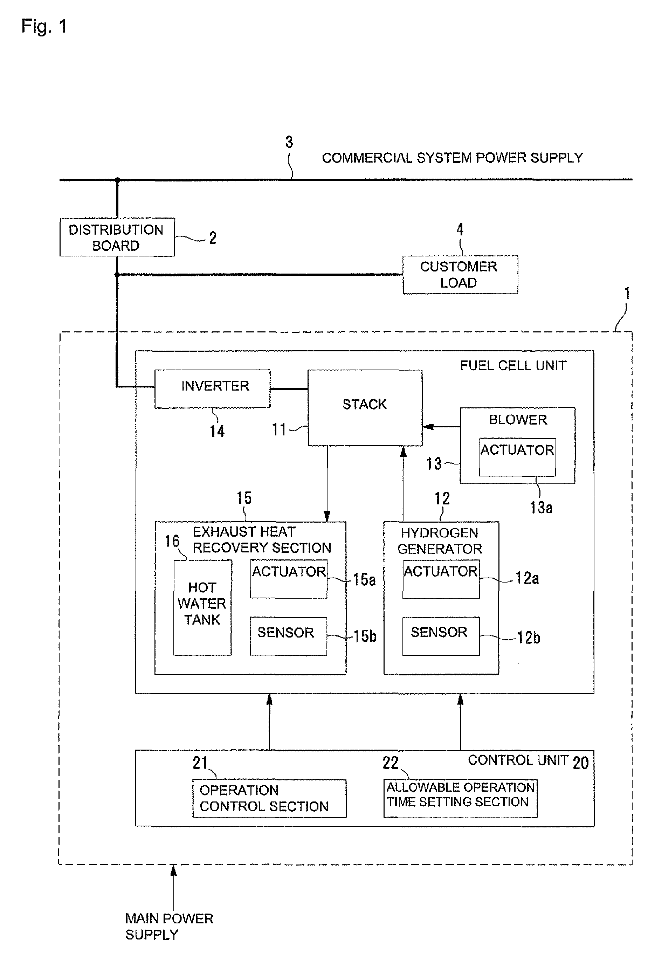

Fig. 1 is a schematic view showing a configuration of a fuel cell system according to Embodiment 1. As shown in Fig. 1, a fuel cell system 1 is coupled to a commercial system power supply 3 via, for example, a distribution board 2 installed at home. A customer load 4 such as an air conditioner or a refrigerator is coupled between the fuel cell system 1 and the distribution board 2. Therefore, when a demand for electric power arises in the customer load 4, the electric power generated in the fuel cell system 1 can be supplied to the customer load 4.

The fuel cell system 1 includes a fuel cell unit 10 and a control unit 20 for controlling its operation. The fuel cell unit 10 generates electric power through an electrochemical reaction between fuel gas and oxidizing gas and supplies the generated electric power to the customer load 4. As the fuel gas, gas containing at least hydrocarbon or hydrogen as a component is used. In the fuel cell unit 10 of the present embodiment, fuel gas generated by reforming material gas such as city gas or LP gas is used.

Now, a specific configuration of the fuel cell unit 10 will be described. The fuel cell unit 10 includes a stack 11, a hydrogen generator 12, a blower 13, an inverter 14, and an exhaust heat recovery section 15. Among these constituents, the stack 11 has a structure in which a plurality of cells are stacked together, each of the cells including an anode and a cathode such that an electrolyte membrane is sandwiched between the anode and the cathode. Fuel gas is supplied from the hydrogen generator 12 to the anode. Oxidizing gas (air) containing oxygen is supplied from the blower 13 to the cathode.

The hydrogen generator 12 performs, using catalysts, steam reforming, an aqueous shift reaction, and a selective oxidization reaction on the material gas supplied, thereby generating the fuel gas containing hydrogen as a major component. In the stack 11, the fuel gas is supplied to the anode, and the oxidizing gas is supplied from the blower 13 to the cathode. The fuel gas and the oxidizing gas react electrochemically each other to generate DC power. The DC power is converted into AC power by an inverter 14 and is supplied to the customer load 4.

The exhaust heat recovery section 15 recovers heat generated during the power generation in the stack 11, and generates hot water by the recovered heat. The exhaust heat recovery section 15 includes a hot water tank 16. The generated hot water is stored in the hot water tank 16. Heat energy owned by the hot water stored in the hot water tank 16 is suitably supplied directly or indirectly, in response to a demand for heat occurring at home.

The hydrogen generator 12 includes an actuator 12a such as a valve for controlling a flow of gas or a heater for heating the gas to promote a catalytic reaction, and a sensor 12b for detecting a temperature or flow rate of the gas. The blower 13 includes an actuator 13a such as a valve for controlling the flow of the gas. The exhaust heat recovery section 15 includes an actuator 15a such as a valve for controlling a flow of cooling water for use in heat exchange, and a sensor 15b for detecting a temperature and flow rate of the cooling water.

The control unit 20 includes an operation control section 21 for controlling the operation (a series of operations which are start-up, power generation, termination, and shut-down) of the fuel cell unit 10, and an allowable operation time setting section 22. As described later in detail, the allowable operation time setting section 22 is configured to set the allowable operation time per unit period (e.g., 1 day) of the fuel cell unit 10. The control unit 20 includes a processing section such as a CPU and a memory section such as a memory, and is operative by electric power supplied from an electric power supply provided outside the system 1.

### [Basic Operation Pattern]

Next, a basic operation pattern of the fuel cell system 1 configured as described above during the power generation will be described.

The operation of the fuel cell system 1 is roughly divided into four control steps and states, which are a start-up step, a power generation state, a termination step, and a shut-down state. The outline of these steps and states will now be described. The start-up step is defined as a preparatory step for placing the fuel cell system 1 in the shut-down state into a state in which the fuel cell system 1 is able to generate electric power. The power generation state is defined as state where the stack 11 is generating electric power using the fuel gas and the oxidizing gas supplied to the stack 11 and is outputting the electric power. The termination step is defined as a step for placing the fuel cell system 1 in a state in which the fuel cell system 1 is unable to generate electric power. The shut-down state is defined as a state where a next power generation command is awaited while monitoring the state of the fuel cell system 1.

In the fuel cell system 1, the control unit 20 properly controls the above stated four steps and states while shifting these four steps and states at timings which are pre-programmed or at timings based on the user's commands. Now, the operation of the fuel cell system 1 in these four steps and states will be described in detail.

Firstly, the start-up step will be described. To enable the fuel cell system 1 to output the electric power, it is necessary to perform a preparatory process in which, for example, the hydrogen generator 12 generates the fuel gas containing hydrogen as a major component. To this end, in the start-up step, for example, the fuel gas is generated from material gas such as city gas. More specifically, the control unit 20 obtains measured values of sensors 12b such as a temperature sensor and a flow sensor attached on the hydrogen generator 12, and performs feedback control of the actuators 12a such as a heater and a fan based on the measured values to raise the temperature of the hydrogen generator 12 up to about 600 ~ 700 degrees C. After that, the hydrogen generator 12 is supplied with the material gas. The hydrogen generator 12 carries out the steam reforming, the aqueous shift reaction, and the selective oxidization reaction sequentially, to generate the fuel gas containing hydrogen as a major component.

When the start-up step has proceeded to a sufficient level and the hydrogen generator 12 stably supplies the fuel gas to the anode of the stack 11, the fuel cell system 1 terminates the start-up step, and shifts to the power generation state in which the stack 11 generates electric power. During the power generation state, the actuator 13a of the blower 13 is actuated to control the amount of the oxidizing gas supplied to the cathode of the stack 11, and the actuator 12a of the hydrogen generator 12 is actuated to control the amount of the fuel gas supplied to the anode of the stack 11. Thereby, in the stack 11, hydrogen in the fuel gas and oxygen in the oxidizing gas electrochemically react with each other, and DC power is generated.

The DC power output from the stack 11 is converted into AC power by an inverter 14 coupled to the stack 11, and the AC power is supplied to the customer load 4. The stack 11 includes a cooling water circulating path coupled to the exhaust heat recovery section 15. The cooling water circulated within the circulating path allows the stack 11 to be cooled and maintained at a predetermined temperature during the power generation in the stack 11. The exhaust heat recovery section 15 recovers heat generated in the stack 11 from the cooling water within the circulating path via a heat exchanger (not shown) and stores the recovered heat as hot water in a hot water tank 16, by controlling, for example, a pump included in the actuator 15a.

Next, the termination step will be described. In the termination step, the valve is closed to stop supply of the material gas such as the city gas to the hydrogen generator 12, and the hydrogen generator 12 stops generation of the fuel gas. The fan included in the hydrogen generator 12 is actuated to cool the hydrogen generator 12 to a temperature at which the material gas is not reformed by a catalyst. In the fuel cell unit 10, to prevent degradation of a power generation block including the stack 11, the hydrogen generator 12, gas paths, and others, purging of the stack 11, the hydrogen generator 12, the gas paths, and others, is carried out using an inert gas.

When the termination step is completed well and the power generation block is kept stably in a state where the power generation block is unable to generate electric power, the control unit 20 stops the operation of the actuator 12a of the hydrogen generator 12 and the actuator 13a of the blower 13, and causes the fuel cell system 1 to shift to the shut-down state. During this shut-down state, the fuel cell system 1 is prepared for a next power generation timing, and the control unit 20 is awaiting a next power generation command input. During the shut-down state, the control unit 20 monitors a safety state of the fuel cell system 1 based on a signal output from a gas leakage sensor and the like. If an abnormality occurs, then a predetermined abnormal process is performed. For example, the user is informed of this abnormality.

As described above, the control unit 20 (to be precise, operation control section 21) causes the power generation unit 10 to operate properly in such a manner that the above stated steps and states are shifted sequentially. Sifting between the steps and the states may be triggered by the user's manual operation of an operation panel (not shown), or the like, a timing set in a timer-controlled reservation operation function, etc.. Automatic operation may be performed in such a manner that if the hot water stored in the hot water tank 16 is less in amount, the power generation is performed, while if the hot water stored in the hot water tank 16 is more in amount, the power generation is stopped. This is suitable, because the operation is performed in response to a demand for hot water supply at home, and efficient operation is implemented.

In addition, a learning function may be provided such that an operation plan is suitably updated in response to past demands for electric power and past demands for hot water supply in the customer load 4. In this case, time periods during which the user frequently consumes the electric power are predicted, and the state is shifted so that the power generation is performed during the time periods. Or, time periods during which the user uses a great amount of hot water are predicted, and the state is shifted so that hot water of a predetermined amount can be ensured during the time periods. This is suitable, because power generation and hot water supply are performed more efficiently. After shifting to the power generation state, an output electric power may be controlled such that it is responsive to the customer load 4's demand for electric power.

In the steps and states which are the start-up step, the termination step, and the shut-down state, except for the power generation state, no electric power is output from the fuel cell system 1. Therefore, the customer load 4 operates by the electric power supplied from the commercial system power supply 3.

### [Setting of allowable operation time]

Next, a procedure for setting the allowable operation time per unit period in the fuel cell system 1 will be described. For the fuel cell system 1 of the present embodiment, for example, a guaranteed usage period of 10 years is set. The fuel cell system 1 is designed to allow power generation operation for 40000 hours which are a durable operation time. The allowable operation time is set in a devised manner so that the fuel cell system 1 is operated fully without leaving a portion of the durable operation time, until the end of the guaranteed usage period, while suppressing an increase/decrease magnitude of the allowable operation time per unit period.

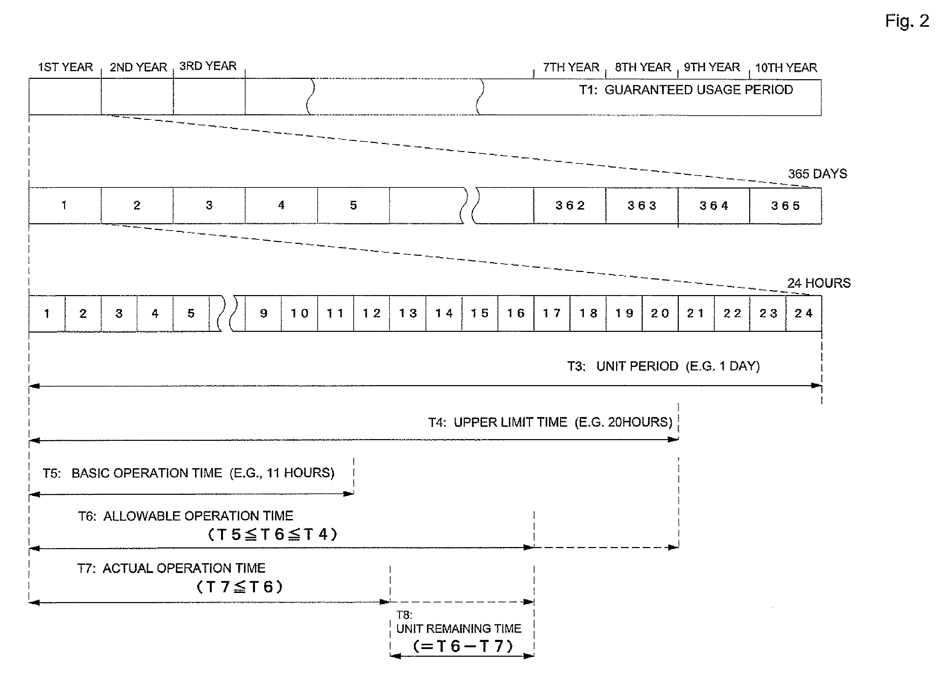

Initially, the terms indicating the times or periods used in the following explanation will be described. Fig. 2 is a schematic view showing a concept of terms indicating times or periods used to describe setting of the allowable operation time. As shown in Fig. 2, "guaranteed usage period (T1)" of about 10 years is set in the fuel cell system 1 of the present embodiment. The guaranteed usage period is a period decided based on an accumulated time for which the fuel cell system 1 is able to generate electric power, and a usage period demanded by a market. In general, the guaranteed usage period refers to a product life presented to the user. The guaranteed usage period is not limited to about 10 years, but may be suitably set to about 15 years or 20 years depending on the accumulated time for which the fuel cell system 1 is able to generate electric power, or the demand in the market. In the present embodiment, for example, the guaranteed usage period of 10 years is used.

As described above, the accumulated time for which the fuel cell system 1 is able to generate electric power, in addition to the guaranteed usage period. This is referred to as "durable operation time (T2)." As the durable operation time, 40000 hours are used in the present embodiment. Depending on a configuration of the system 1, time of 50000 hours, 60000 hours, etc., may be used. In the present embodiment, the durable operation time is meant to refer to an accumulated time during the power generation state, and not to include times corresponding to another states or steps. Alternatively, the durable operation time may include, for example, a time required for the start-up step or a time required for the termination step.

"Unit period (T3)" is defined as one of predetermined periods into which the guaranteed usage period is divided. The unit period may be a minimum period for which the fuel cell system 1 goes through the four states and steps. Typically, the unit period may be one day. Although one day is used as the unit period in the present embodiment, a different period may be suitably used depending on the minimum period for which the fuel cell system 1 goes through the four states and steps. Irrespective of the minimum period, a period such as 1 week, 10 days, or 1 month may be used as the unit period.

"Upper limit time (T4)" is set as an upper limit value of a time for which the fuel cell system 1 is able to generate electric power during the unit period. The upper limit time is set irrespective of the guaranteed usage period or the durable operation time. The upper limit time is set because of requirement of the shut-down state for a predetermined time on a regular basis, to achieve a long-time operation of the fuel cell system 1. For example, in the present embodiment, assuming that a time required for the start-up step of the fuel cell system 1 is 1 hour, a time required for the termination step is 1 hour, and a time required for placing the system 1 in the shut-down state is 2 hours for the purpose of refresh, 20 hours which are obtained by excluding these times (4 times in total) from the unit period may be set as the upper limit time.

"Basic operation time (T5)" is set in each unit period. The basic operation time is a reference value of the allowable operation time as described later, and is a predetermined time for which the fuel cell system 1 is able to perform the power generation operation in each unit period. When an equal basic operation time is set in all of unit periods in the case where the guaranteed usage period is 10 years (about 3650 days), the durable operation time is 40000 hours, and the unit period is 1 day as described above, the basic operation time per unit period (1 day) is about 11 hours which are obtained by dividing the durable operation time by the guaranteed usage period. As should be understood from this, when the power generation operation for about 11 hours are carried out every day, the fuel cell system 1 consumes all of 40000 hours which are the durable operation time until the end of the guaranteed usage period of 10 years.

"Allowable operation time (T6)" is set as a time which is obtained by adding a part of the remaining operation time described later to the basic operation time and does not exceed the upper limit time. Like the above stated upper limit time, the allowable operation time is an upper limit value of the time for which the fuel cell system 1 is able to perform the power generation operation in each unit period, but is set based on the guaranteed usage period or the durable operation time, differently from the upper limit time.

To be specific, as described above, the basic operation time is set for the fuel cell system 1, as a rough standard for allowing the fuel cell system 1 to be operated until the end of the guaranteed usage period. However, the power generation operation is not performed always for the basic operation time every day, but the power generation operation time is sometimes shorter depending on user's demand for electric power, or the like. Accordingly, the allowable operation time is set as the time for which the fuel cell system 1 is able to perform the power generation operation in each unit period so that the durable operation time of 40000 hours are consumed finally until the end of the guaranteed usage period of 10 years even in the above case.

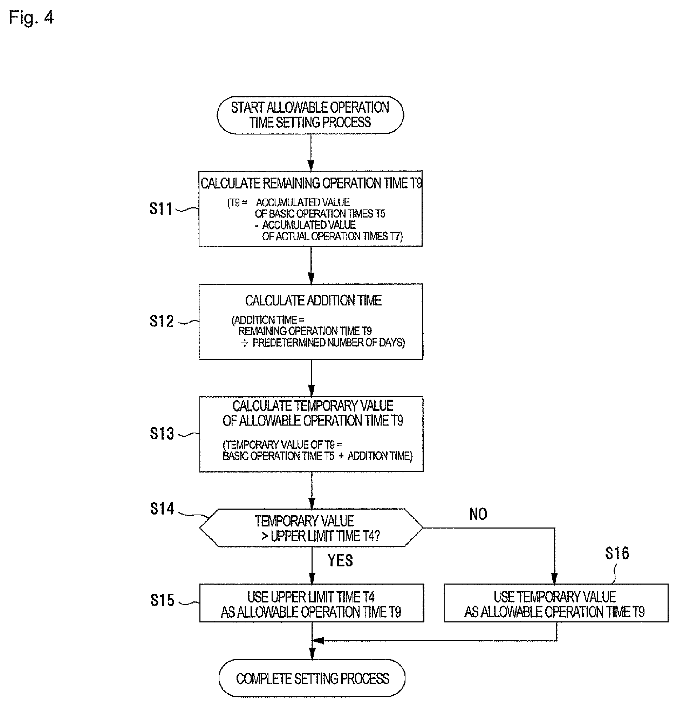

As described above, the allowable operation time is the value which does not exceed the upper limit time, and therefore is shorter than the unit period. Because of this, in the case where the unit period is, for example, 1 day, the fuel cell system 1 is not operated over 2 days, and as a result, the operation time can be controlled easily. Since the fuel cell system 1 repeats power generation and shut-down on a regular basis in every unit period, it is possible to give the user an impression that the fuel cell system 1 operates stably. The setting of the allowable operation time is performed by an allowable operation time setting section 22 (see Fig. 1) in the control unit 20. A specific procedure for the setting will be described in detail later with reference to Fig. 4 and the like.

"Actual operation time (T7)" is defined as an actual power operation time in each unit period. The fuel cell system 1 is able to perform the power generation operation within the above stated allowable operation time. Therefore, the actual operation time is a numeric value which is not more than the allowable operation time. "Unit remaining time (T8)" is defined as a difference value between the allowable operation time and the actual operation time in each unit period. "Remaining operation time (T9)" is defined as a difference value between an accumulated value of past basic operation times and an accumulated value of past actual operation times. The fuel cell system 1 shifts from the power generation state to the termination step, at a time point when the actual operation time reaches the allowable operation time.

"Remaining durable time (T10)" is defined as a time concept different from the remaining operation time. The remaining durable time is a time obtained by subtracting a consumed amount (i.e., accumulated value of actual operation times) of the durable operation time from the guaranteed usage period, and is defined as an amount of the durable operation time left at a certain time point. As the power generation operation of the fuel cell system 1 proceeds, the remaining durable time decreases.

Fig. 2 shows that a start point (left end point) of the upper limit time T4, a start point of the basic operation time T5, a start point of the allowable operation time T6, and a start point of the actual operation time T7 conform to a start point of the unit period T3. However, this does not mean that the times T4 ~ T7 start from the start point of the unit period T3. These times are shown in this way for the sake of convenience to make clear a length relationship between the unit period T3 and the times T4 ~ T7.

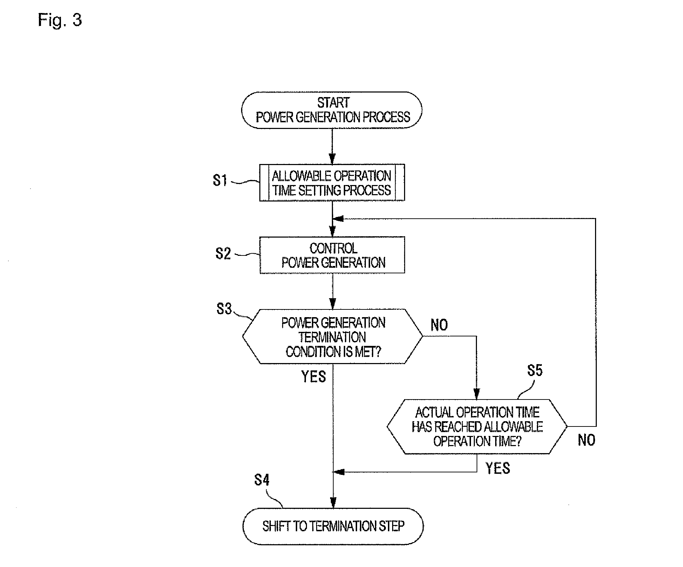

Next, an operation of the fuel cell system 1 during the power generation state will be described. Fig. 3 is a flowchart showing a control procedure of the power generation operation of the fuel cell system 1. The control is executed by the operation control section 21 in the control unit 20.

As shown in Fig. 3, when the fuel cell system 1 shifts to the power generation state through the start-up step, the allowable operation time T6 per unit period (one day) is set (step S1). In other words, the allowable operation time T6 on a day to which shifting to the power generation state belongs is set. After this setting is complete, the fuel cell system 1 performs the power generation operation (step S2). To monitor the timing when the power generation state shifts to the termination step, while performing the power generation operation, it is determined on a regular basis whether or not a condition used for terminating the power generation operation is met (step S3). The condition used for terminating the power generation operation may include inputting a signal by the user's manual operation of the operation panel or the like, incoming of the timing preset in the timer-controlled reservation operation function.

If it is determined that the condition used for terminating the power generation operation is met in step S3, the fuel cell system 1 is shifted from the power generation state to the termination step (step S4). On the other hand, if it is determined that the condition used for terminating the power generation operation is not met in determination in step S3 which occurs on a regular basis, it is determined whether or not the actual operation time on that day has reached the allowable operation time in each determination (step S5). If it is determined that the actual operation time on that day has reached the allowable operation time, the fuel cell system 1 is shifted from the power generation state to the termination step (step S4). On the other hand, if it is determined that the actual operation time on that day has not reached the allowable operation time, the process from step S2 is performed again to continue the power generation state. The timing at which the allowable operation time setting process in step S1 is performed may be set as a timing when the start-up step shifts to the power generation state, or as a timing in the middle of the start-up step.

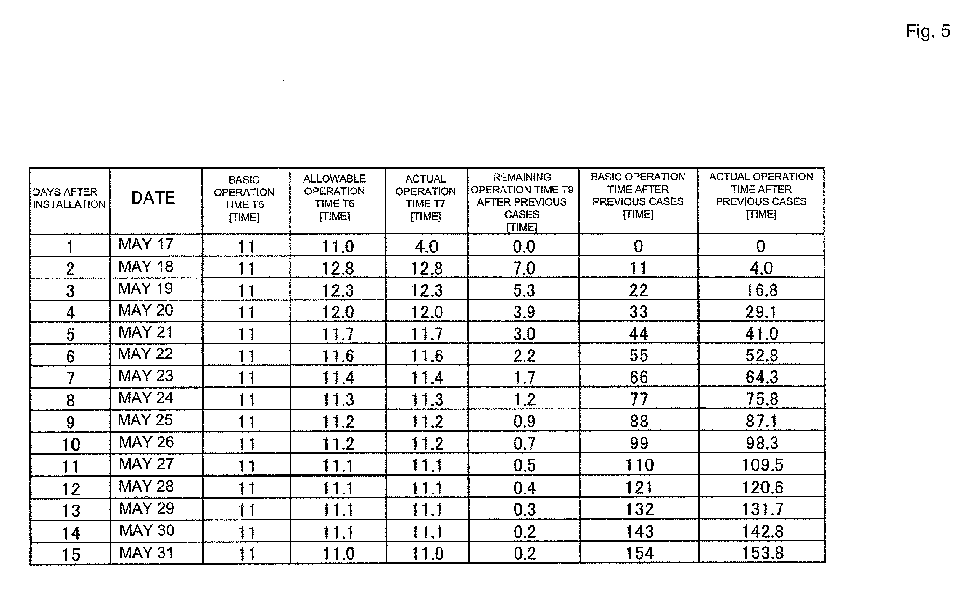

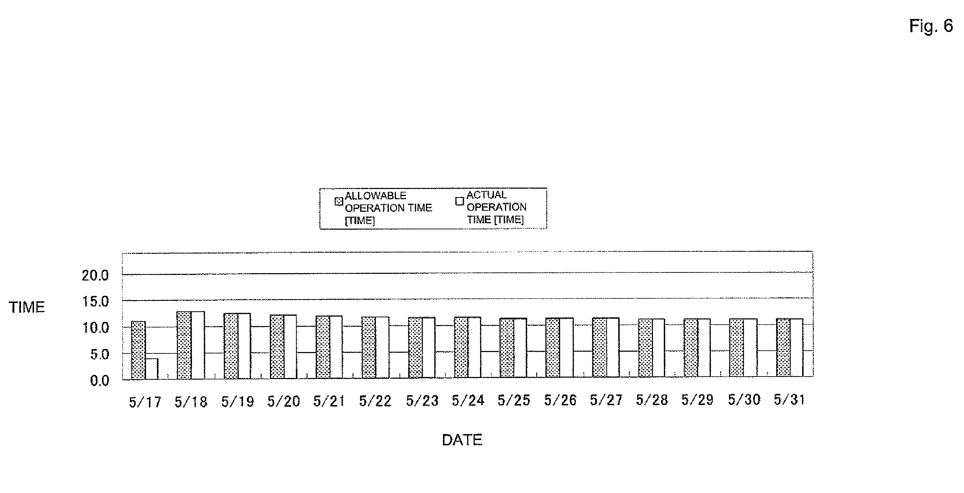

The allowable operation time setting process will be described more specifically. Fig. 4 is a flowchart showing a process for setting the allowable operation time per day. Fig. 5 is a table showing a first setting example of the allowable operation time. Fig. 6 is a bar graph showing a change in the allowable operation time and a change in the actual operation time of the table of Fig. 5, which change occurs from day to day.

As shown in Fig. 4, the allowable operation time setting section 22 subtracts an accumulated value of the actual operation times T7 after previous cases (previous days) from an accumulated value of basic operation times T5 after previous cases (previous days), thereby resulting in the remaining operation time T9 (step S11). The allowable operation time setting section 22 divides the remaining operation time T9 by a predetermined number of days (2 or more days) to calculate an addition time (step S12). The predetermined number of days by which the remaining operation time T9 is divided may be suitable number of days which are not less than 2 days, for example, 4 days or 10 days. In the example of setting shown in Fig. 5, the predetermined number of days is 4 days.

The allowable operation time setting section 22 adds the addition time to the basic operation time T5 to calculate a temporary value of the allowable operation time T6 per day (step S13). It is determined whether or not the calculated allowable operation time T6 is more than the upper limit time T4 (step S14). If it is determined that the calculated allowable operation time T6 is not less than the upper limit time T4, the allowable operation time setting section 22 sets the allowable operation time T6 per day to a value equal to the value of the upper limit time T4 (step S15), and finishes the process. On the other hand, if it is determined that the calculated allowable operation time T6 is less than the upper limit time T4, the allowable operation time setting section 22 sets the temporary value of the allowable operation time T6 calculated in step S13 as a decided allowable operation time (step S16), and finishes the process.

### [First setting example]

An example in which the process shown in Fig. 4 is specifically applied will be described with reference to Figs. 5 and 6. In the setting example shown in Figs. 5 and 6, a case where the fuel cell system 1 performs the power generation operation firstly on May 17 after the fuel cell system 1 is installed. In the first setting example, it is supposed that, on a 1 st day, the fuel cell system 1 is operated for a time less than the allowable operation time T6 and the remaining operation time occurs, and on a second and the following days, the fuel cell system 1 performs the power generation operation for a time equal to the allowable operation time T6.

On May 17 which is the 1 st day, an accumulated value of the basic operation times T5 after previous cases is 0 hour and an accumulated value of the actual operation times T7 after previous cases is 0 hour, because the power generation was not performed in the past. Since the remaining operation time T9 is 0 hour (step S11), and the addition time is 0 hour (step S12), the allowable operation time T6 on the 1st day is set to a time equal to the basic operation time T5 (step S13, S 14, S16). In the present embodiment, since the guaranteed usage period T1 is 10 years (about 3650 days), and the durable operation time T2 is 40000 hours, the basic operation time T5 per day (unit period) is about 11 hours. Therefore, as shown in Fig. 5, the allowable operation time T6 on May 17 is set to 11 hours.

Here it is assumed that the actual operation time T7 on May 17 is 4 hours (see Fig. 5). In this case, at a time point before the power generation operation on 2nd day (May 18), the remaining operation time T9 is 7 hours (Step S11). In the present embodiment, if the remaining operation time T9 occurs, the allowable operation time T6 is set in such a manner that the remaining operation time T9 is allocated evenly to plural days thereafter. Specifically, 7 hours which are the remaining operation time T9 are divided by predetermined number of days, for example 4 days, to derive a value of about 1.8 hours (step S12). 1.8 hours are added to 11 hours of the basic operation time T5, thereby resulting in a value of 12. 8 hours which are a temporary value of the allowable operation time T6 on 2nd days (May 18) (step S13). This temporary value (12.8 hours) is less than an upper limit time (20 hours) set in the present embodiment, and therefore is set as a decided allowable operation time (see step S14, S16, and Fig. 5).

A divisor of the remaining operation time T9 is a factor for deciding a consuming speed of the remaining operation time T9. Therefore, as the divisor is smaller, the remaining operation time T9 can be consumed at a higher pace. On the other hand, if the divisor is set too small, an increasing/decreasing magnitude of the allowable operation time T6 which occurs from day to day increases, which may make the user feel discomfort. In view of this, the divisor is preferably set so as to facilitate consuming of the remaining operation time T9 and so as to avoid the user from feeling discomfort. For example, the divisor may be set to 4 days or 10 days. As stated above, in the present embodiment, 4 days are used as the divisor.

By setting the divisor and deciding the allowable operation time T6 as described above, if the remaining operation time T9 occurs and the allowable operation time T6 increases, the allowable operation time T6 is decreased gradually closer to the basic operation time T5 thereafter. Since a change amount of the allowable operation time T6 which occurs from day to day is suppressed, the remaining operation time T9 can be consumed at a higher space without making the user feel discomfort.

Next, it is assumed that the actual operation time T7 on 2nd day (May 18) is 12. 8 hours (see Fig. 5). In this case, at a time point before the power generation operation on 3rd day (May 19), the remaining operation time T9 is 5.2 hours (Step S11). In other words, since the accumulated value of the basic operation times T5 after previous cases is 22 hours (= 11 hours plus 11 hours) and the accumulated value of the actual operation times T7 after previous cases is 16.8 hours (= 4.0 hours plus 12. 8 hours), the remaining operation time T9 is 5.2 hours which are a difference value between the accumulated values. The remaining operation time T9 is divided by the predetermined number of days (4 days), thereby resulting in 1. 3 hours (step S12). 1.3 hours are added to 11 hours of the basic operation time T5, thereby resulting in 12. 3 hours. 12. 3 hours are set as the allowable operation time T6 on 3rd day (May 19) (see Fig. 5).

As should be understood from the above, although the remaining operation time T9 of 7 hours occurs at a time point of May 17, an increase in the allowable operation time T6 on May 18 with respect to the allowable operation time T6 on May 17 is suppressed to 1.8 hours, and a decrease in the allowable operation time T6 on May 19 with respect to the allowable operation time T6 on May 18 is suppressed to 0.5 hour. On May 20 and the following days, if the fuel cell system 1 performs the power generation operation for the allowable operation time T6, the allowable operation time T6 gradually decreases from day to day (see Fig. 6), and the user does not feel discomfort. On May 26 which is tenth day from the first day, the allowable operation time T6 decreases to 11.2 hours, and the remaining operation time T9 is 0.7 hour. Thus, the remaining operation time T9 can be consumed relatively earlier.

### [Second setting example]

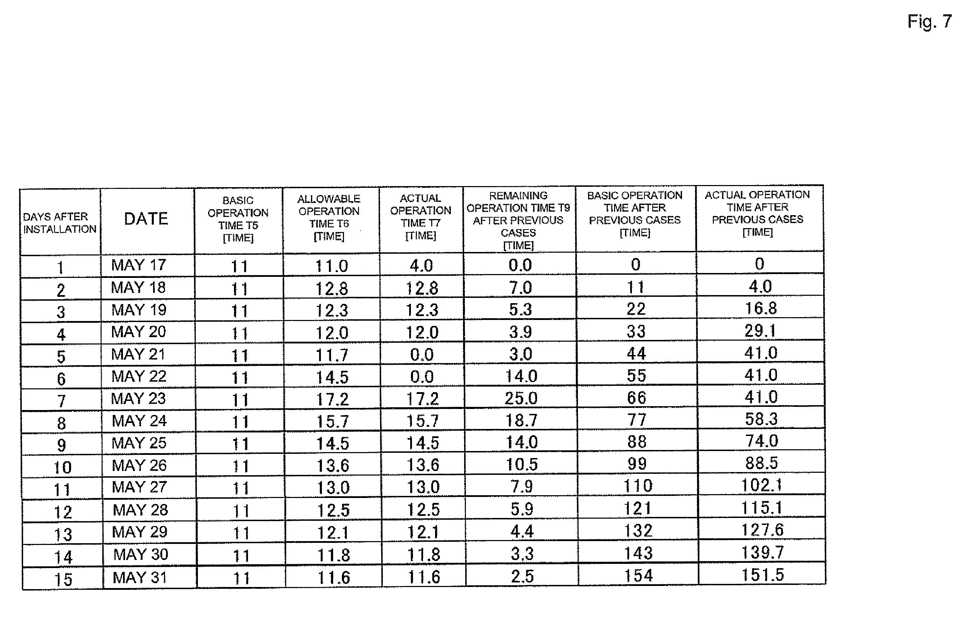

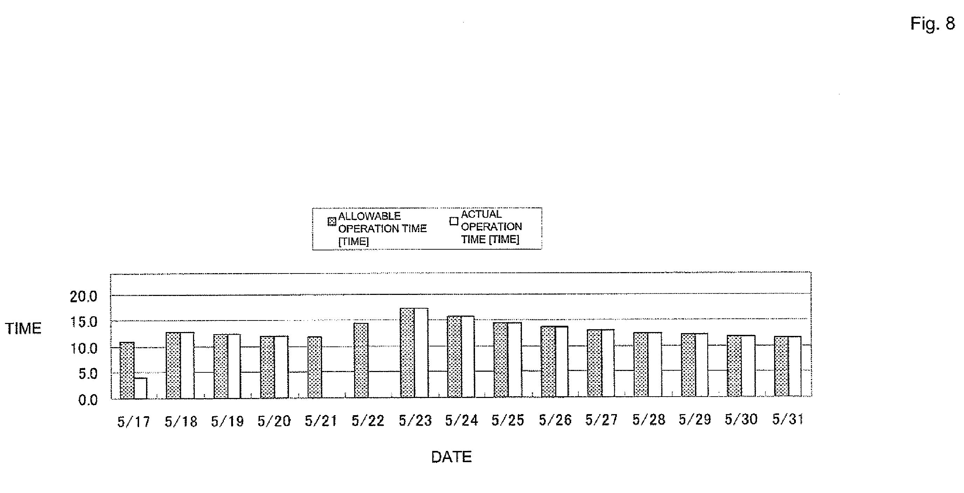

Fig. 7 is a table showing a second setting example of the allowable operation time. Fig. 8 is a bar graph showing a change in the allowable operation time and a change in the actual operation time of the table of Fig. 7, which change occurs from day to day. The second setting example is similar to the first setting example from 1st day to 4th day. In the second setting example, it is assumed that the actual operation time T7 on 5th day (May 21) and the actual operation time T7 on sixth day (May 22) are 0.

In this case, at a time point before the power generation operation on 7th day (May 23), the remaining operation time T9 is 25 hours. In accordance with the setting process of allowable operation time of the present embodiment, the allowable operation time T6 on 7th day is suppressed to 17.2.hours which are 2. 7 hours longer than that of May 22. The allowable operation times T6 on 8th day and the following days are 15. 7 hours, 14.5 hours, ... which decrease gradually closer to 11 hours of the basic operation time T5. Thus, it is possible to suppress an increase amount of the allowable operation time T6 with respect to the remaining operation time T9, and to suppress a decrease amount in the allowable operation time T6 thereafter, which does not make the user feel discomfort. By increasing the allowable operation time T6, the remaining operation time T9 can be consumed surely. The remaining operation time T9 can be lessened to 10.5 hour on 10th day (May 26) and to 2. 5 hours on 15th day (May 31).

For example, in the second setting example, it is assumed that the actual operation time T7 on 7th day and the actual operation time T7 on 8th day are 0, like the case on 5th day and 6th day, although this is not illustrated in the first and second setting examples. In this case, at a time point before the power generation operation on 9th day, the remaining operation time T9 is 47 hours. 47 hours are divided by the predetermined number of days (4 days), thereby resulting in about 11.7 hours. 11.7 hours are added, thereby resulting in 22.7 hours as a temporary value of the allowable operation time T6. However, since this temporary value is longer than 20 hours of the upper limit time T4, it is not used, but the upper limit time T4 is used as the allowable operation time T6 as shown in step S15 of Fig. 4. In this way, the allowable operation time T6 which is longer than the upper limit time T4 is not used, and the power generation time is always set to a time shorter than the upper limit time T4. This makes it possible to ensure several times as the shut-down state when the start-up step and the termination step are taken into account. As a result, the fuel cell system 1 can be refreshed surely.

As described above, in accordance with the fuel cell system 1 of the present embodiment, it is possible to suppress an increase amount of the allowable operation time T6 with respect to the remaining operation time T9, and suppress a decrease amount of the allowable operation time T6 thereafter. Thus, the user does not feel discomfort. If the remaining operation time T9 occurs, it can be consumed surely by increasing the allowable operation time T6.

In addition to the above, it is possible to prevent all of the durable operation time T2 from being consumed before the guaranteed usage period T1 lapses. In other words, a timing at which the guaranteed usage period T1 ends and a timing at which all of the durable operation time T2 is consumed can be made to substantially conform to each other. Therefore, a demand for more hot water supply and a demand for electric power can be met by heat and electric power generated in the fuel cell system 1.

### (Embodiment 2)

In Embodiment 2, a description will be given of a setting procedure of the allowable operation time T6 in a case where the remaining operation time T9 occurs at a time immediately before the end of the guaranteed usage period T1. For example, in Embodiment 1, a description has been given of the case where the addition time is calculated by dividing the remaining operation time T9 by 4 days. However, in a case the remaining operation time T9 occurs at a time which is 3 days before the end of the guaranteed usage period T1, if the addition time is calculated by dividing the remaining operation time T9 by 4 days, all of the remaining time T9 cannot be consumed in 3 days left before the end of the guaranteed usage period T1. To avoid such a situation, in Embodiment 2, the allowable operation time T6 is set in the procedure described below.

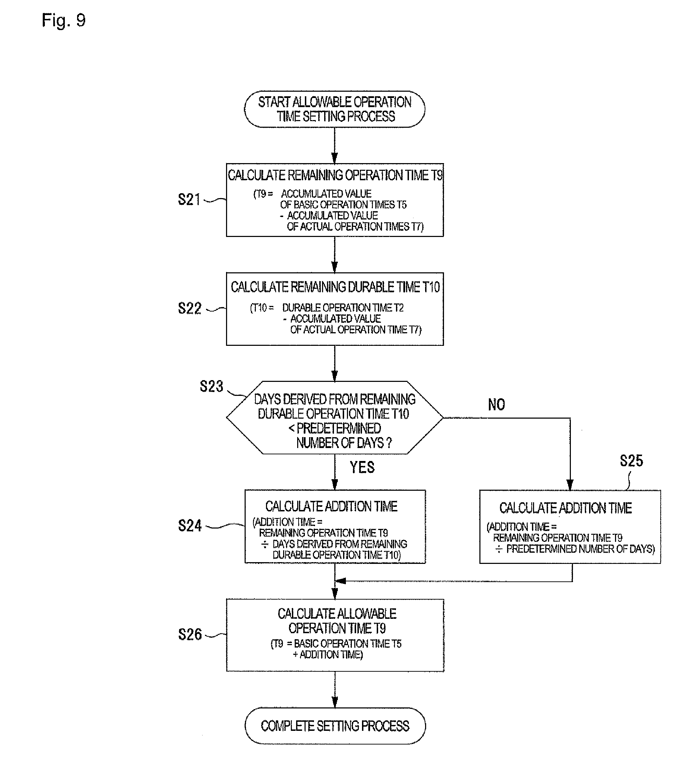

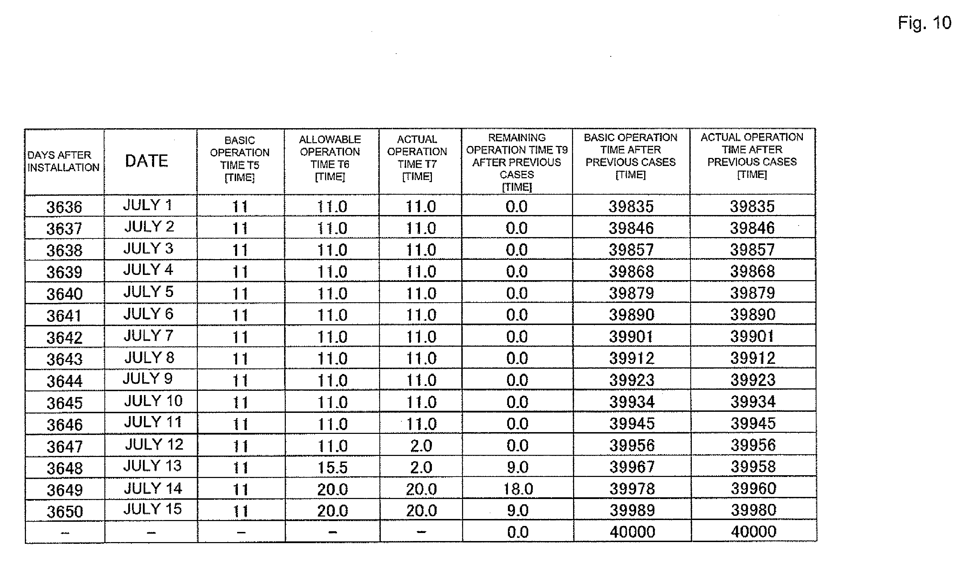

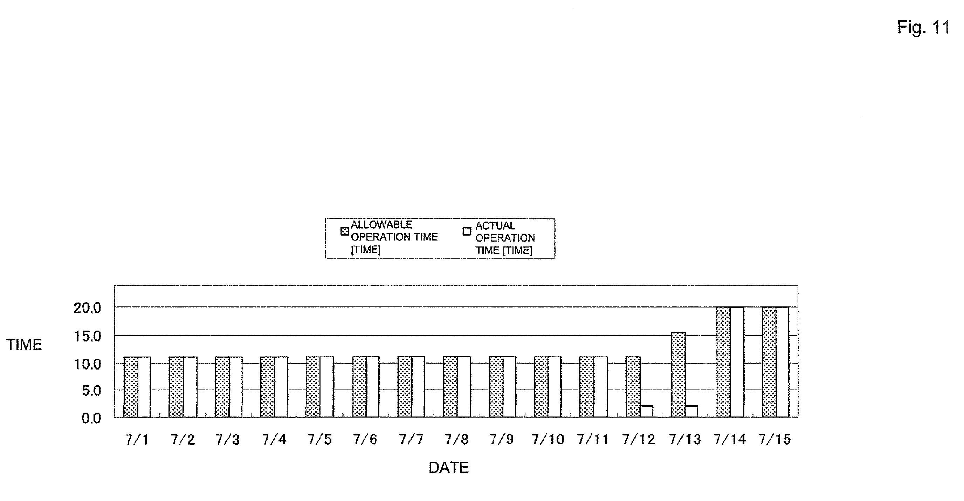

Fig. 9 is a flowchart showing a process for setting the allowable operation time per day according to Embodiment 2. Fig. 10 is a table showing a third setting example of the allowable operation time. Fig. 11 is a bar graph showing a change in the allowable operation time and a change in the actual operation time of the table of Fig. 10, which change occur from day to day. The configuration of the fuel cell system of Embodiment 2 is identical to that of the fuel cell system 1 of Embodiment 1 as shown in Fig. 1, and will not be described in detail. The process for setting the allowable operation time T6 described herein is performed by the allowable operation time setting section 22 in the control unit 20.

As shown in Fig. 9, the allowable operation time setting section 22 subtracts an accumulated value of actual operation times T7 after previous cases (previous days) from an accumulated value of basic operation times T5 after previous cases (previous days), thereby resulting in the remaining operation time T9 (step S21). Then, the allowable operation time setting section 22 subtracts an accumulated value of actual operation times T7 after previous cases from the durable operation time T2, thereby resulting in remaining durable time T10 (step S22). Then, it is determined whether or not days (number of days) derived from the remaining durable time T 10 is less than predetermined number of days (step S23).

The "predetermined number of days" are the same as the predetermined number of days illustrated in step S12 of Fig. 4, and is a divisor by which the remaining operation time T9 is divided to calculate the addition time. In the present embodiment, the predetermined number of days are set to 4 days. Note that the "predetermined number of days" may be set to days (number of days) different from the "predetermined number of days" illustrated in step S12 of Fig. 4. For example, the "predetermined number of days" may be 3 days, 5 days, or 6 days. The "days (number of days) derived from the remaining durable time T10" refer to days derived by dividing the remaining durable time T10 by 24 hours and by rounding up fractions. The fraction may be rounded off, or fraction over 1/2 may be counted as one and the rest may be disregarded.

If it is determined that the days derived from the remaining durable time T10 are less than the predetermined number of days, the allowable operation time setting section 22 divides the remaining operation time T9 obtained in step S21 by the days derived from the remaining durable time T10, thereby obtaining the addition time (step S24). On the other hand, if it is determined that the days derived from the remaining durable time T10 are not less than the predetermined number of days, the allowable operation time setting section 22 divides the remaining operation time T9 obtained in step S21 by the predetermined number of days (e.g., 4 days) to obtain the addition time, like Embodiment 1 (step S25). In step S26, the allowable operation time setting section 22 adds the obtained addition time to the basic operation time T5 to obtain the allowable operation time T6.

### [Third setting example]

An example in which the process shown in Fig. 9 is specifically applied will be described with reference to Figs. 10 and 11. In the setting examples shown in Figs. 10 and 11, it is assumed that an accumulated value of the basic operation times reaches 40000 hours on July 15, and 10 years (3650 days after installation of the fuel cell system 1) which are the guaranteed usage period T1 lapse, on July 15. On July 11 and previous days, each of the basic operation times T5 conforms to the corresponding actual operation time T7, and the remaining operation time T9 is 0 hour. On July 12 and July 13, the actual operation time T7 is 2 hours. At a time point before the power generation operation on July 14, the remaining operation time T9 is 18 hours.

A description will be given of a case where the process shown in Fig. 9 is applied to the third setting example will be described. For example, at a time point before the power generation operation on July 9, the remaining durable time T10 is 77 hours (= 40000 hours minus 39923 hours). The days (number of days) derived from the remaining durable time T10 are 4 days by rounding up fraction. Therefore, it is determined that the days derived from the remaining durable time T10 are not less than predetermined number of days (4 days) in step S23, and the allowable operation time T6 is set by the same procedure as described in Embodiment 1 (step S25). Since the remaining operation time T9 on July 9 is 0 hour, the allowable operation time T6 on that day is set to 11 hours which are equal to the basic operation time T5.

On July 10 following July 9, the remaining durable time T10 is 66 hours (= 40000 hours minus 39934 hours), and therefore, the days derived from the remaining durable time T10 are 3 days. Therefore, unlike Embodiment 1, the addition time is obtained by dividing the remaining operation time T9 by the days (3 days) derived from the remaining durable operation time T10 (step S24). Since the remaining operation time T9 is 0 hour on July 10, the addition time is 0 hour, and the allowable operation time T6 is set to 11 hours which are equal to the basic operation time T5 (step S26). With regard to July 11, in the same manner, the days derived from the remaining durable time T10 are 3 days, the remaining operation time T9 is 0 hour, and the allowable operation time T6 is set to 11 hours which are equal to the basic operation time T5.

On July 12, the remaining durable time T10 is 44 hours (= 40000 hours minus 39956 hours), and therefore, the days derived from the remaining durable time T10 are 2 days. However, at this time point, since the remaining operation time T9 is 0 hour, the allowable operation time T6 is set to 11 hours which are equal to the basic operation time T5. In the third setting example, the actual operation time T7 on July 12 is 2 hours which are shorter than the allowable operation time T6.

On July 13, the remaining durable time T10 is 42 hours (= 40000 hours minus 39958 hours), and therefore, the days derived from the remaining durable time T10 are 2 days. Since the actual operation time T7 on July 12 is shorter than the allowable operation time T6, the remaining operation time T9 of 9 hours occurs. Accordingly, in the fuel cell system 1 of the present embodiment, the remaining operation time T9 (9 hours) is divided by the days (2 days) derived from the remaining durable time T10, thereby resulting in the addition time (step S24). To be specific, the addition time is 4.5 hours. Then, the addition time (4.5 hours) is added to the basic operation time (11 I hours), thereby resulting in the allowable operation time T6 of 15.5 hours (step S26). In the third setting example, the actual operation time T7 on July 13 is 2 hours which are shorter than the allowable operation time T6, like the case of July 12.

On July 14, the remaining durable time T10 is 40 hours (= 40000 hours minus 39960 hours), and therefore, the days derived from the remaining durable time T10 are 2 days. Since the actual operation time T7 on July 13 is shorter than the allowable operation time T6, the remaining operation time T9 of 18 hours occurs. Accordingly, the remaining operation time T9 (18 hours) is divided by the days (2 days) derived from the remaining durable time T10, thereby resulting in the addition time of 9.0 hours (step S24). Then, the addition time (9.0 hours) is added to the basic operation time (11 hours), thereby resulting in the allowable operation time T6 of 20.0 hours (step S26). In the example shown in Fig. 10, the actual operation time T7 on July 14 is 20.0 hours which are equal to the allowable operation time T6.

On July 15 which is a last day, the remaining durable time T10 is 20 hours (= 40000 hours minus 39980 hours), and therefore, the days derived from the remaining durable time T10 are 1 day. 9 hours remain as the remaining operation time T9. Accordingly, the remaining operation time T9 (9 hours) is divided by the day (1day) derived from the remaining durable time T10, thereby resulting in the addition time of 9.0 hours (step S24). Then, the addition time (9.0 hours) is added to the basic operation time (11 hours), thereby resulting in the allowable operation time T6 of 20.0 hours (step S26). In the example shown in Fig. 10, the actual operation time T7 on July 15 is 20.0 hours which are equal to the allowable operation time T6. On July 15 which is the last day, all of the durable operation time T2 is consumed, and the guaranteed usage period T1 is reached.

As described above, when the days derived from the remaining durable time T10 are less than the predetermined number of days, the remaining operation time T9 is divided by the days derived from the remaining durable time T10, rather than the predetermined number of days. In other words, if the remaining operation time T9 occurs at a time point immediately before the end of the guaranteed usage period T1, the remaining operation time T9 is divided by the days derived from the remaining durable time T10 which are less than the predetermined number of days, and the resulting time is decided as the addition time. This increases the addition time. Therefore, the remaining operation time T9 can be consumed positively. As a result, it is possible to avoid a situation in which a portion of the durable operation time T2 is left at the end of the guaranteed usage period T1.

### [Comparison example]

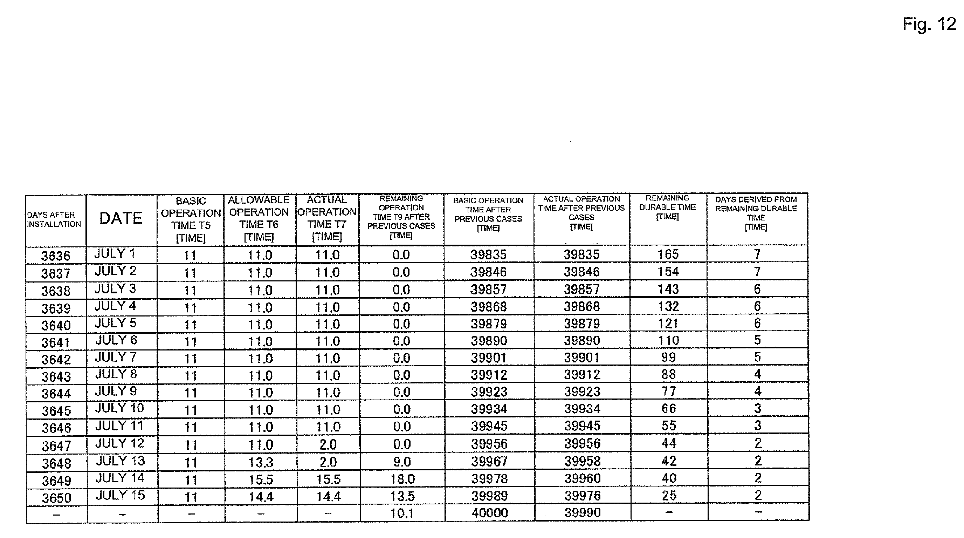

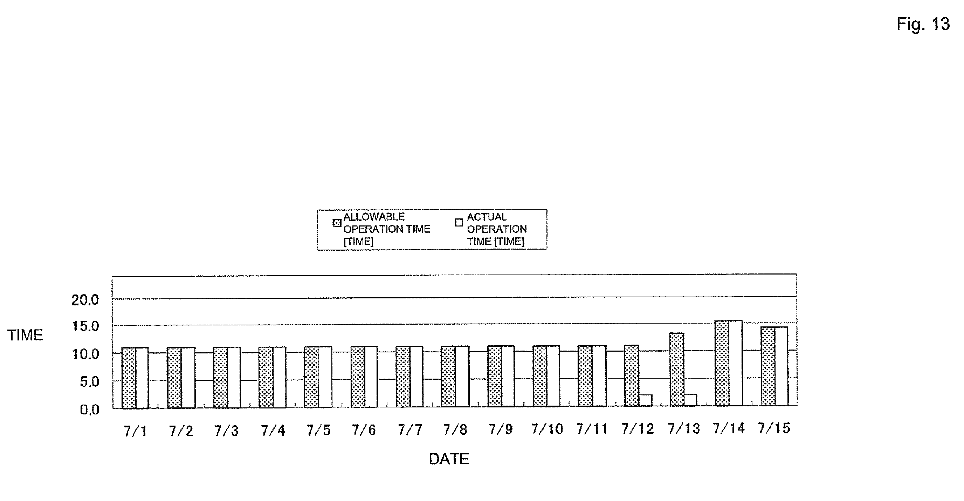

Fig. 12 is a table showing a comparative example relating to setting of the allowable operation time. Fig. 13 is a bar graph showing a change in the allowable operation time and a change in the actual operation time of the table of Fig. 12, which change occurs from day to day. In this comparative example, like the third setting example, on July 11 and previous days, the operation pattern is such that the basic operation time T5 is equal to the actual operation time T7, and the remaining operation time T9 is 0 hour, and on July 12 and July 13, the actual operation time T7 is 2 hours. However, a deriving method of the allowable operation time T6 after the days (number of days) derived from the remaining durable time T 10 becomes less than the predetermined number of days is different from that of the third setting example. In this comparison example, the addition time obtained by dividing the remaining operation time T9 by the predetermined number of days (4 days) is added to the basic operation time T5, thereby resulting in the allowable operation time T6.

As shown in Fig. 12, in this comparison example, the allowable operation time T6 on July 14 is 15.5 hours which are less than the allowable operation time T6 (20.0 hours) on July 14 in the third setting example, and the allowable operation time T6 on July 15 is 14.4 hours which are less than the allowable operation time T6 (20.0 hours) on July 15 in the third setting example. Therefore, all of the remaining operation time T9 cannot be consumed, and 10.1 hours are left at the end of the guaranteed usage period T1.

As should be appreciated from the above, by using the process of Embodiment 2 as the process for setting the allowable operation time T6 at a time point immediately before the end of the guaranteed usage period T1 of the fuel cell system 1, the remaining operation time T9 can be consumed positively. As a result, it is possible to avoid a situation in which a portion of the durable operation time T2 is left at the end of the guaranteed usage period T1.

### (Embodiment 3)

The basic operation time T5 may be varied with years having passed or according to months in a year, instead of a fixed value over the entire period of the guaranteed usage period T1. In Embodiment 3, a case where the basic operation time T5 is varied with years having passed or according to months will be described. The configuration of the fuel cell system of Embodiment 3 is identical to that of the fuel cell system 1 of Fig. 1, and description thereof is omitted.

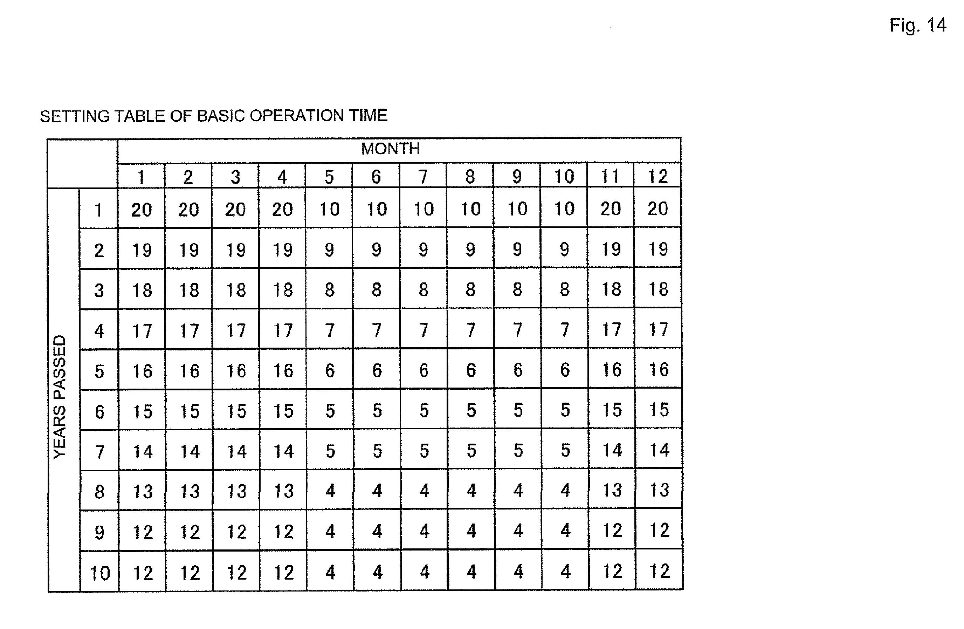

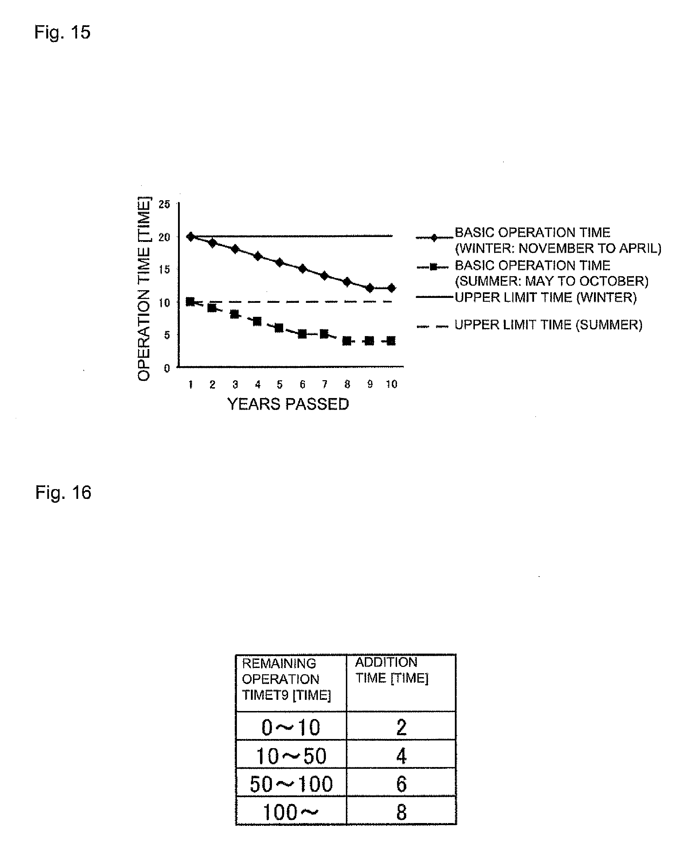

Fig. 14 is a conceptual view of a setting table showing the basic operation time T5 set for each year and month which passes after the fuel cell system 1 is installed. Fig. 15 is a graph showing a change in the basic operation time T5 of Fig. 14, which change occurs with a passage of year. The power generation time of the fuel cell system 1 is suitably set according to a demand for hot water supply. Typically, there is a tendency that a demand for hot water supply is high in winter season, and is low in summer season. Therefore, in the present embodiment, as shown in Figs. 14 and 15, in winter season of November to April, the basic operation time T5 is set longer, while in summer season of May to October, the basic operation time T5 is set shorter. As shown in Fig. 15, the upper limit time T4 in winter season is longer (20 hours), while the upper limit time T4 in summer season is shorter (10 hours). With this setting, in a case where there is a difference in the demand for hot water supply depending on the season, efficient operation can be carried out while keeping a good balance between demand and supply.

As shown in Figs. 14 and 15, the basic operation time T5 is set shorter with years passing after the fuel cell system 1 is installed. Typically, due to degradation of the stack 11 and the like, power generation efficiency of the fuel cell system 1 decreases, but heat recovery efficiency of the fuel cell system 1 increases. By setting the basic operation time T5 shorter according to years passing after installation of the fuel cell system 1, the amount of hot water supply in the fuel cell system 1 can be kept substantially constant.

In Embodiment 3, data indicating a correspondence between the remaining operation time T9 and the addition time is prepared, and is stored in a memory section (not shown) in the control unit 20. In Embodiment 3, differently from Embodiment 1 and Embodiment 2, the addition time is not obtained by dividing the remaining operation time T9 by the predetermined number of days, but a correspondence between the remaining operation time T9 and the addition time which is a divided part of the remaining operation time T9 is pre-stored.

Fig. 16 is a conceptual view of a setting table showing the relationship between the remaining operation time T9 and the addition time. As shown in Fig. 16, in the present embodiment, when the remaining operation time T9 is not less than 0 hour and less than 10 hours, the addition time is set to 2 hours. In the same manner, when the remaining operation time T9 is not less than 10 hours and less than 50 hours, the addition time is set to 4 hours. When the remaining operation time T9 is not less than 50 hours and less than 100 hours, the addition time is set to 6 hours. When the remaining operation time T9 is not less than 100 hours, the addition time is set to 8 hours.

In this way, the addition time which is longer corresponds to the remaining operation time T9 which is longer. Therefore, when the remaining operation time T9 is longer, it can be consumed at a higher pace, while the remaining operation time T9 is shorter, it can be consumed at a lower pace.

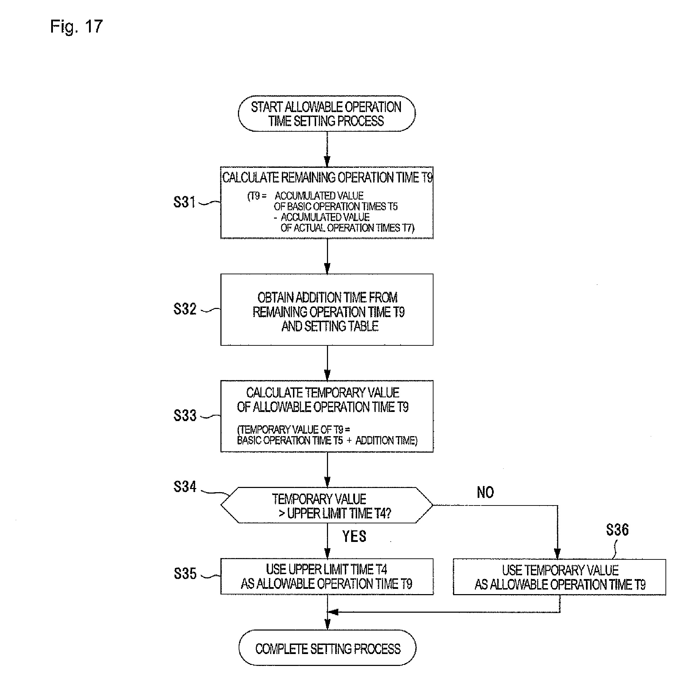

Next, the process for setting the allowable operation time of the present embodiment will be described specifically. Fig. 17 is a flowchart showing the process for setting the allowable operation time per day according to Embodiment 3.

As shown in Fig. 17, the allowable operation time setting section 22 subtracts an accumulated value of actual operation times T7 after previous cases (previous days) from an accumulated value of basic operation times T5 after previous cases (previous days), thereby resulting in the remaining operation time T9 (step S31). For example, it is assumed that there is a particular day on which the actual operation time T7 is 8 hours, in a period in which the basic operation time T5 on January in winter season in a first year after installation of the fuel cell system 1 is 20 hours (see Fig. 14). In that case, the remaining operation time T9 is 12 hours (= 20 hours minus 8 hours). Then, the addition time is obtained based on the remaining operation time T9 and the setting table shown in Fig. 16 (step S32). If the remaining operation time T9 is 12 hours like the above case, 4 hours are obtained as the addition time from the table shown in Fig. 16.

The allowable operation time setting section 22 adds the addition time to the basic operation time T5, to calculate a temporary value of the allowable operation time T6 per day (step S33). Then, the allowable operation time setting section 22 determines whether or not the calculated allowable operation time T6 is more than the upper limit time T4 (step S34). If it is determined that the calculated allowable operation time T6 is not less than the upper limit time T4, the allowable operation time setting section 22 sets the allowable operation time T6 per day to a value equal to the upper limit time T4 (step S35), and finishes the process. If it is determined that the calculated allowable operation time T6 is less than the upper limit time T4, the allowable operation time setting section 22 sets the temporary value of the allowable operation time T6 calculated in step S33 as a decided allowable operation time (step S36) and finishes the process.

In the above example, since the basic operation time T5 is 20 hours, and the addition time is 4 hours, the temporary value of the allowable operation time T6 calculated in step S33 is 24 hours. Therefore, it is determined that the calculated allowable operation time T6 is not less than 20 hours of the upper limit time T4, in step S34. The allowable operation time setting section 22 sets the allowable operation time T6 to 20 hours equal to the upper limit time T4. That is, in a first year after installation of the fuel cell system 1, since the basic operation time T5 is set to 20 hours (see Fig. 15) equal to the upper limit time T4 in winter season, and the basic operation time T5 is set to 10 hours (see Fig. 15) equal to the upper limit time T4 in summer season, the addition time is not added to the basic operation time T5 and the remaining operation time T5 is not consumed, even if the remaining operation time T5 occurs.

Next, description will be given of a case where the remaining operation time T9 of 12 hours occurs like the above case in winter season in a second year after the fuel cell system 1 is installed. In this case, the basic operation time T5 is 19 hours (see Fig. 14), and the addition time is 4 hours (see Fig. 16). Therefore, the temporary allowable operation time T6 is 23 hours (= 19 hours plus 4 hours) (step S33). Since 23 hours which are the temporary value are not less than 20 hours of the upper limit time T4, the upper limit time T4 is set as the allowable operation time T6 (step 35). However, since the basic operation time T5 is 19 hours, 1 hour of the remaining operation time T9 can be consumed. Under the same conditions, 2 hours can be consumed in a 3rd year, and 3 hours can be consumed in a 4th year. Thus, longer time can be consumed with a passage of years.

In accordance with the above configuration, in a period in which years passing after installation of the fuel cell system 1 is less and the basic operation time T5 is set to a relatively long time, the remaining operation time T9 which is a longer time can be stored. In a period in which the basic operation time T5 is set to a relatively short time, in a period after a passage of years, consuming of the stored remaining operation time T9 is facilitated. This makes it possible to suppress the allowable operation time T6 and the actual operation time T7 from decreasing over years. This prevents the user from feeling the setting in which the basic operation time T5 is shorter with a passage of years, although the setting is actually made in this way (see Fig. 14).

Thus far, Embodiments 1 ~ 3 of the present invention have been specifically described. But, the embodiments of the present invention are not limited to the above configuration. For example, the unit period need not be 1 day. In a case where a demand for electric power or a demand for heat changes periodically every week as a minimum unit, the unit period may be 1 week. Or, another period such as 48 hours, 2 weeks, 1 month, season, etc., may be set as the unit period.

In Embodiments 1 ~ 3, description has been given assuming that the actual operation time is identical to the power generation time. This is because the durable operation time of the fuel cell system 1 is decided by a life of the stack 11 which is a basic component, and it is appropriate that the power generation time is assumed as the actual operation time. Nonetheless, in a case where the life of the fuel cell system 1 is decided depending on the life of the actuators and the life of the sensors included in the hydrogen generator 12 and the blower 13, the actual operation time suitably includes a time required for the start-up step and a time required for the termination step, in addition to the power generation time.

In Embodiment 3, the basic operation time T5 is set individually for summer season and winter season. Alternatively, the basic operation time T5 may be set for each season and each month. The basic operation time T5 is suitably set to various values depending on the circumstances or situations, because the basic operation time can meet the demand for hot water supply.

Although in Embodiment 3, the basic operation time is set shorter according to years passing after the fuel cell system 1 is installed, it may be set shorter based on an energization time or the accumulated operation time after the fuel cell system 1 is installed. For example, in a case where a main power supply of the fuel cell system 1 is off, because of, for example, a long-time absence of the user, degradation progressing over time does not occur significantly in the stack 11 and the like, during that period of the absence. Since it is predicted that a decrease in the power generation efficiency which would progress over years will not occur. Therefore, suitably, the period during which the main power supply is off is suitably excluded from the years passing after installation of the fuel cell system 1. If an accumulated value of the energization time is used instead of the years in the setting table of Fig. 14, the basic operation time T5 can be set more appropriately based on the energization time obtained by excluding the period during which the main power supply is off.

Although Embodiments 1~3 can be practiced independently, two or three of them may be combined.

### Industrial Applicability

The present invention is applied to a fuel cell system which can prevent a durable operation time from being consumed before a guaranteed usage period lapses, and its life from being reduced, and can lessen a change in an allowable operation time which occurs from day to day so that a user does not feel discomfort, and an operation method thereof. The present invention is applied to a fuel cell system which can meet a demand for more hot water supply and a demand for more electric power with heat and electric power generated in the fuel cell system, and an operation method thereof.

### Reference Signs Lists

- 1: fuel cell system
- 4: distribution board
- 10: fuel cell unit
- 11: stack
- 12: hydrogen generator
- 13: blower
- 14: inverter
- 15: exhaust heat recovery section
- 20: control unit
- 21: operation control section
- 22: allowable operation time setting section

## Claims

1. A fuel cell system comprising:
a fuel cell unit which supplies electric power generated through an electrochemical reaction between fuel gas and oxidizing gas to an external load; and
a control section which controls an operation of the fuel cell unit;
the control section including:
an allowable operation time setting section which sets an allowable operation time of the fuel cell unit for each unit period shorter than a guaranteed usage period set in the fuel cell unit, based on a durable operation time of the fuel cell unit; and
an operation control section which operates the fuel cell unit such that an actual operation time of the fuel cell unit per unit period is not more than the allowable operation time set for each unit period;
the allowable operation time setting section calculates an accumulated value of reference values of the allowable operation time for each unit period which correspond to past all unit periods and an accumulated value of values of the actual operation time for each unit period which correspond to past all unit periods, the reference values of the allowable operation time for each unit period being set based on the durable operation time and the guaranteed usage period; and
if a remaining operation time which is a difference value between the accumulated value of reference values of the allowable operation time and the accumulated value of the values of the actual operation time occurs, the allowable operation time setting section sets a time obtained by adding a divided part of the remaining operation time to the reference value, as an allowable operation time in a next unit period.

2. The fuel cell system according to Claim 1,
wherein the reference values of the allowable operation time are set such that an accumulated value obtained by adding the reference values corresponding to all of the unit periods conforms to the durable operation time.

3. The fuel cell system according to Claim 1 or 2,
wherein the fuel cell unit is a heat and electric power supply device which supplies electric power and heat;
the operation control section decides an operation start time in the unit period based on an amount of electric power consumed in the external load in the past and an amount of heat consumed in the external load in the past such that the actual operation time is not more than the allowable operation time; and
the operation control section controls the fuel cell unit such that the fuel cell unit outputs the electric power according to an amount of the electric power consumed by the external load, after the fuel cell unit is started-up at the power generation start time.

4. The fuel cell system according to any one of Claims 1 to 3,
wherein the allowable operation time setting section sets the allowable operation time such that the allowable operation time obtained by adding the part of the remaining operation time to the reference value is shorter than the unit period.

5. The fuel cell system according to any one of Claims 1 to 4,
wherein the allowable operation time setting section sets the allowable operation time in such a manner that a time obtained by dividing the remaining operation time by predetermined number of days is added to the reference value.

6. The fuel cell system according to any one of Claims 1 to 4,
wherein the allowable operation time setting section pre-stores data indicating a relation between the remaining operation time and an addition value which is added to the reference value.

7. The fuel cell system according to any one of Claims 1 to 6,
wherein the allowable operation time setting section sets the allowable operation time in such a manner that if a remaining durable time which is a difference value between the accumulated value of the values of the actual operation time which correspond to past all unit periods and the durable operation time is less than a predetermined value, the remaining operation time is allocated to remaining unit periods without leaving a surplus time.

8. The fuel cell system according to any one of Claims 1 to 7,
wherein the reference values of the allowable operation time are set greater in a period in a year in which a demand for heat is higher than in a period in the year in which a demand for heat is lower.

9. The fuel cell system according to any one of Claims 1 to 8,
wherein the reference values of the allowable operation time are set greater in a period in a year in which an average temperature on one day is relatively lower.

10. The fuel cell system according to any one of Claims 1 to 8,
wherein the reference values of the allowable operation time are set such that a reference value in a particular period in a year is greater than a reference value in the particular period in a subsequent year coming after said year.

11. A method of operating a fuel cell system including a fuel cell unit and a control section which controls the fuel cell unit, comprising the steps of:
setting an allowable operation time of the fuel cell unit for each unit period shorter than a guaranteed usage period set in the fuel cell unit, based on a durable operation time of the fuel cell unit; and
operating the fuel cell unit such that an actual operation time of the fuel cell unit per unit period is not more than the allowable operation time set for each unit period;
in the step of setting the allowable operation time, an accumulated value of reference values of the allowable operation time for each unit period which correspond to all unit periods is calculated, and an accumulated value of values of the actual operation time for each unit period correspond to all unit periods is calculated, the reference values of the allowable operation time for each unit period being set based on the durable operation time and the guaranteed usage period; and
if a remaining operation value which is a difference value between the accumulated value of reference values of the allowable operation time and the accumulated value of the values of the actual operation time occurs, setting a time obtained by adding a divided part of the remaining operation time to the reference value, as an allowable operation time in a next unit period.
